(19) Europäisches Patentamt
European Patent Office
Office européen des brevets

(11) **EP 2 799 898 B1**

(12) **EUROPÄISCHE PATENTSCHRIFT**

(45) Veröffentlichungstag und Bekanntmachung des Hinweises auf die Patenterteilung:
**10.07.2019 Patentblatt 2019/28**

(51) Int Cl.:
*G01S 7/40* *(2006.01)*     *G01S 13/95* *(2006.01)*

(21) Anmeldenummer: **13002347.6**

(22) Anmeldetag: **02.05.2013**

(54) **Wetterradar**

Weather radar

Radar météorologique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**05.11.2014 Patentblatt 2014/45**

(73) Patentinhaber: **LEONARDO Germany GmbH 41470 Neuss (DE)**

(72) Erfinder: **Beyer, Stefan 40235 Düsseldorf (DE)**

(74) Vertreter: **Henseler, Daniela et al Sparing Röhl Henseler Patentanwälte Postfach 14 04 43 40074 Düsseldorf (DE)**

(56) Entgegenhaltungen:
**WO-A1-2006/035109    WO-A1-2011/001206 DE-A1-102011 012 843    US-B2- 7 495 599 US-B2- 8 004 458**

**Beschreibung**

Die Erfindung betrifft ein Wetterradar zum Messen von Radarsignalen im GHz-Bereich nach dem Oberbegriff des Anspruchs 1.

Wetterradare senden Mikrowellenpulse mit hoher Leistung und messen die Stärke des Signals, das vom Regen oder anderen Zielen zurückgestreut wird. Aus der Signalstärke kann dann beispielsweise die Regenmenge geschätzt werden. Dazu ist eine Kalibrierung des Wetterradars und insbesondere seines Empfängers notwendig.

Aus WO 2011/001206 A1 ist ein Radarsystem bekannt, in dem ein Testsignal mit einer von dem Nutzsignal verschiedenen Frequenz generiert und dem von den Antennen empfangenen Radarsignal über direktionale Koppler überlagert wird. Die überlagerten Signale werden anschließend von Empfänger-Schaltkreisen weiterverarbeitet, an deren Ausgängen Module zur Überwachung der Phase und Verstärkung der Signalwege vorgesehen sind.

Aus DE 10 2011 012843 A1 ist eine Fahrerassistenzeinrichtung für ein Fahrzeug bekannt, welche ein Radargerät zum Bestimmen einer auf ein fahrzeugexternes Objekt bezogenen Messgröße aufweist, wobei das Radargerät umfasst: zumindest eine erste und eine zweite Empfangsantenne jeweils zum Empfangen von Signalen; einen mit der ersten Empfangsantenne über einen ersten Empfangspfad gekoppelten ersten Abwärtsmischer und einen mit der zweiten Empfangsantenne über einen zweiten Empfangspfad gekoppelten zweiten Abwärtsmischer zum Herabmischen der empfangenen Signale in jeweilige Basisbandsignale; eine Steuereinrichtung zum Bestimmen der Messgröße anhand der Basisbandsignale; und Testmittel zum Erzeugen eines lokalen Prüfsignals und zum Einkoppeln des Prüfsignals in den ersten Empfangspfad und in den zweiten Empfangspfad, sodass die Steuereinrichtung das durch den ersten Abwärtsmischer abwärts gemischte Prüfsignal den zweiten Abwärtsmischer abwärts gemischte Prüfsignal als zweites Testsignal empfängt. Die Steuereinrichtung bestimmt aus den Testsignalen eine frequenzabhängige Korrekturgröße für die Korrektur der Messgröße.

Aus US 7 495 599 B2 ist ein polarimetrisches Wetterradarsystem bekannt, das die Signalwege der beiden unterschiedlichen Polarisationen dadurch kalibriert, dass ein niederenergetisches Testsignal mit einer Frequenz gleich der Radarfrequenz in beide Signalwege eingekoppelt wird. Die Unterschiede in den Messwerten, die sich an den Ausgängen der beiden Signalwege ergeben, werden dann als Kalibrierungsparameter gespeichert, so dass die nachfolgende digitale Signalverarbeitung die Unterschiedlichkeit der Signalwege für reale Radarsignale anschließend berücksichtigen und herausrechnen kann. Die Kalibrierung kann dabei entweder einmalig mit einem Dauerstrich-Testsignal erfolgen, wobei das Antennensignal für den Zeitraum der Kalibrierung blockiert werden muss, oder auf einer Puls-für-Puls Basis. In diesem Fall wird für die Kalibrierung eine bestimmte Entfernungszelle reserviert, in der dann ein gepulstes Testsignal eingespeist und anstatt des atmosphärischen Echos empfangen wird. Nachteilig an dieser Kalibrierungsmethode ist, dass während der Kalibrierung die Datenaufnahme des Wetterradars unterbrochen werden muss oder Entfernungszellen blockiert und von der operationellen Nutzsignalverarbeitung ausgeschlossen werden müssen.

Aus US 8 004 458 B2 ist ein anderes polarimetrisches Wetterradar bekannt, das ebenfalls ein Testsignal auf der Radarfrequenz in die Signalwege einspeist. Dieses Testsignal kann in Amplitude und Phase variiert werden und erlaubt somit die Simulation von verschiedenen Wetterbedingungen. Ein solchermaßen variables Testsignal kann zum Test und zur Validierung der ordnungsgemäßen Funktion und Kalibrierung des Wetterradar-Empfängers eingesetzt werden. Beispielsweise können Doppler-Testsignale eingespeist werden oder es kann die komplexe Transferfunktion des Empfängers über den kompletten Dynamikbereich bestimmt werden. Auch bei diesem Wetterradar ist nachteilig, dass die Datenaufnahme während der Kalibrierung unterbrochen werden muss oder Entfernungszellen blockiert und von der operationellen Nutzsignalverarbeitung ausgeschlossen werden müssen.

Aus WO 2012/139029 A1 ist ein weiteres polarimetrisches Radar bekannt, das im laufenden Betrieb, ohne Unterbrechung der Datenaufnahme, die beiden Signalwege kalibriert. Dies geschieht durch die Identifikation von einzelnen Signalen in den aufgenommenen Rohdaten, die runden Objekten entsprechen. Da runde Objekte aufgrund ihrer Symmetrie ein gleiches Reflexionsverhalten für Radarwellen beider Polarisationen aufweisen, können an Hand ihrer Reflexionssignale die beiden Signalwege relativ zueinander kalibriert werden. Dieses Kalibrierungsverfahren hat den Nachteil, dass die beiden Signalwege nur relativ zueinander kalibriert werden können, so dass absolute Werte für Kalibrierungsparameter, wie Verstärkung oder Rauschen, der einzelnen Signalwege und deren Zeitabhängigkeit nicht ermittelt werden können. Durch die thermischen Driften der verwendeten Bauelemente im Signalweg sind daher Messungen zu unterschiedlichen Zeitpunkten nicht vergleichbar.

Die Aufgabe der Erfindung ist es daher, die Messung der Signalstärke bei Wetterradaren zu verbessern.

Diese Aufgabe wird durch die Merkmale des Anspruchs 1 gelöst.

Hierdurch wird eine permanente Kalibrierung der Signalwege des Empfängers im operationellen Betrieb und für beliebige Antennenpositionen bei einem Wetterradar ermöglicht.

Vorteilhaft ist außerdem, dass der Aufbau der Einrichtung zur Trennung des Testsignals und des Radarsignals variabel gestaltbar ist und sich nach den Anforderungen des Benutzers richtet.

Das erfindungsgemäße Wetterradar kann eine Splitteinrichtung zur Trennung des Testsignals und des Radarsignals aufweisen, die die einzelnen Signale parallel der Verarbeitungseinrichtung zuführt. Vorteilhaft an dieser Ausführung ist, dass zur Kalibrierung des Wetterradars, die Messdatenaufnahme nicht mehr unterbrochen oder Entfernungszellen blockiert werden müssen. Dadurch sind die Kalibrierungsparameter der einzelnen Signalwege des Empfängers, wie Verstärkung oder Rauschen, permanent während der Messdatenaufnahme für beliebige Antennenpositionen bestimmbar. Weiterhin vorteilhaft ist, dass sowohl zeit- als auch richtungs- und entfernungsabhängige Änderungen der Kalibrierungsparameter überwachbar und feststellbar sind, da die Bestimmung der Kalibrierungsparameter für jede Antennenposition und jedes Range Gate erfolgt.

Ferner ist vorteilhaft, dass durch die permanente Kalibrierung die Vergleichbarkeit der Messdaten im Zeitverlauf verbessert ist.

Alternativ kann das Wetterradar eine Switch-Einrichtung zur Trennung des Testsignals und des Radarsignals aufweisen, die zyklisch zwischen beiden Signalen umschaltet. An diesem Ausführungsbeispiel ist vorteilhaft, dass der Aufbau des Empfängers vereinfacht ist.

Außerdem kann die mindestens eine Frequenz des Testsignals mit einem Frequenzversatz zur Frequenz des Radarsignals wählbar sein in Abhängigkeit von der Bandbreite der Verarbeitungseinrichtung des Empfängers. Daran ist vorteilhaft, dass die Frequenzen des Testsignals vorzugsweise außerhalb der Schwankungsbreite der Frequenz des Radarsignals wählbar sind. Ist der Frequenzversatz kleiner als 10%, besonders bevorzugt kleiner als 5% der Radar-Zwischenfrequenz gewählt, so ist vorteilhaft, dass die Modellierung der Frequenzabhängigkeit der Kalibrierungsparameter besonders genau ist, da Kalibrierungsparameter in einem solchen Frequenzbereich nur eine geringfügige Variation zeigen.

Nach aus dem Stand der Technik bekannten Methoden sind die Kalibrierungsparameter, wie Verstärkung oder Rauschen, des Signalwegs für die Frequenz des Testsignals ableitbar. Um den Empfänger zu kalibrieren, müssen die Kalibrierungsparameter des Signalwegs für die Frequenz des eingehenden Radarsignals aus den Kalibrierungsparametern des Signalwegs für die Frequenz des Testsignals bestimmt werden, da die Übertragungsfunktion des Empfängers für beide Signale nicht notwendigerweise identisch ist. Dies geschieht erfindungsgemäß durch die Modellierung der Frequenzabhängigkeit der Kalibrierungsparameter, die eine Relation zwischen den Kalibrierungsparametern bei verschiedenen Frequenzen herstellt. Hierzu sind in der Auswerteeinrichtung verschiedene mathematische Modelle verwendbar.

Beispielsweise kann ein konstantes, frequenzunabhängiges Modell verwendet werden. In diesem Fall sind die Kalibrierungsparameter für die Testfrequenz als Kalibrierungsparameter für die Radarfrequenz übernehmbar. Für einen im Vergleich zur Radar-Zwischenfrequenz kleinen Frequenzversatz $\Delta f$, von beispielsweise $\Delta f \leq 5\%$ der Radar-Zwischenfrequenz, kann vorzugsweise dieses Modell Verwendung finden, da sich die Eigenschaften des Signalwegs für Frequenzen mit einem solch geringen Frequenzversatz kaum unterscheiden werden. Vorteilhaft an diesem Modell ist die einfache Umsetzbarkeit.

Einem anderen Modell liegt die Annahme zu Grunde, dass die Frequenzabhängigkeit der Kalibrierungsparameter separierbar ist von den Einflüssen äußerer Gegebenheiten. In diesem Fall sind einmalig in einer Hauptkalibrierung aus den Kalibrierungsparametern des Signalwegs für die Testfrequenz und die Radarfrequenz bestimmte Verhältnisse zeitlich konstant. Vorteilhaft an diesem Modell ist seine Anwendbarkeit auch für größere Frequenzversätze $\Delta f$, da es die Übertragungsfunktion der Verarbeitungseinrichtung berücksichtigt.

Weitere Modelle der Frequenzabhängigkeit beruhen auf Interpolation bzw. Extrapolation. Dazu muss das Testsignal mindestens zwei Frequenzen aufweisen. Im einfachsten Fall besteht das Testsignal aus zwei Frequenzen, die verschieden sind von der Radarfrequenz, wobei die eine oberhalb und die andere unterhalb der Radarfrequenz liegt. Für jede der Testsignal-Frequenzen sind die Kalibrierungsparameter des Signalwegs einzeln bestimmbar. Daraus ist die Frequenzabhängigkeit der Kalibrierungsparameter durch Interpolation ermittelbar. Aus der interpolierten Frequenzabhängigkeit sind dann die Kalibrierungsparameter für die Radarfrequenz bestimmbar. Verwendbar sind außerdem Modelle, bei denen zwischen mehr als zwei Testsignalfrequenzen zu interpolieren ist oder bei denen die Radarfrequenz außerhalb der Testsignalfrequenzen liegt, sodass die Frequenzabhängigkeit der Kalibrierungsparameter auch durch Extrapolation modelliert werden muss. Vorteilhaft an diesen Interpolationsmodellen ist, dass keine Hauptkalibrierung durchgeführt werden muss. Weiterhin vorteilhaft ist, dass die Modellierung der Frequenzabhängigkeit der Kalibrierungsparameter besonders genau erfolgt. Zudem ist vorteilhaft, dass die Bestimmung der Kalibrierungsparameter für mindestens zwei Testsignal-Frequenzen eine Plausibilitätskontrolle der erhaltenen Werte erlaubt. Liegen die Kalibrierungsparameter für die einzelnen Testfrequenzen ungewöhnlich weit auseinander, so liegt vermutlich ein Fehler vor.

Der Koppler zum Einspeisen des Testsignals kann auch als Diplexer ausgeführt sein. Ein Diplexer kann mehrere Signale mit unterschiedlichen Frequenzen zusammenführen oder auf ihre Frequenzen aufteilen. Da die Einfügungsdämpfung eines Diplexers wesentlich geringer ist als die eines Kopplers, ist hieran vorteilhaft, dass die Kalibrierungsparameter aufgrund geringerer Dämpfungsverluste im Signalweg genauer bestimmbar sind.

Ein Wetterradar kann neben den gewöhnlichen Empfangskanälen einen sogenannten TX Sample Kanal aufweisen, mit dem die Eigenschaften des Sendepulses vermessbar sind. Da der TX Sample Kanal als ein weiterer vollwertiger Empfängerkanal auf einem Signalweg den Empfänger durchläuft, weist er ähnliche Driftcharakteristika wie die übrigen Empfangskanäle auf und kann ebenfalls erfindungsgemäß kalibriert werden. Vorteilhaft hieran ist, dass die Vergleichbarkeit der Messdaten im TX Sample Kanal und den anderen Empfängerkanälen im Zeitverlauf verbessert ist.

Die Frequenz des eingehenden Radarsignals kann zeitlich veränderbar sein, wenn beispielsweise ein Magnetronsender in dem Wetterradar zum Einsatz kommt. Aus diesem Grund kann der Empfänger des Wetterradars so ausgebildet sein, dass die Signalverarbeitung innerhalb der Verarbeitungseinrichtung der veränderten Frequenz anpassbar ist. Außerdem kann die Frequenz des Testsignals der Frequenz des Radarsignals nachführbar sein. Vorteilhaft an dieser Ausgestaltung ist, dass auch Wetterradare mit Magnetronsender, die aufgrund ihrer erhöhten Sendeleistung verbesserte Messungen ermöglichen, permanent kalibriert werden können.

Die Form des Testsignals kann über den Testsignalgenerator vorgebbar sein. An dieser Ausgestaltung ist vorteilhaft, dass mit Hilfe des Testsignals auf dem Testsignalkanal verschiedene Wetterbedingungen simuliert werden können und so die bestimmungsgemäße Funktion des Wetterradars auch für komplexe Signale im laufenden Betrieb überprüft werden kann.

Weitere Vorteile und Ausgestaltungen der Erfindung sind der nachfolgenden Beschreibung und den Unteransprüchen zu entnehmen.

Nachfolgend wird die Erfindung an Hand der in den beigefügten Abbildungen dargestellten Ausführungsbeispiele näher erläutert.

Fig. 1 zeigt schematisch den Aufbau eines Wetterradars nach dem Stand der Technik.

Fig. 2 zeigt schematisch den Aufbau eines ersten Ausführungsbeispiels des erfindungsgemäßen Wetterradars, in dem die überlagerten Signale mittels einer Splitt-Einrichtung trennbar sind.

Fig. 3 zeigt ein Beispiel für die Lagen der Passbänder der für die Trennung von Test- und Radarsignal gemäß Ausführungsbeispiel 1 verwendeten Filter.

Fig. 4 zeigt schematisch den Aufbau eines zweiten Ausführungsbeispiels des erfindungsgemäßen Wetterradars, in dem die überlagerten Signale mittels einer Switch-Einrichtung trennbar sind.

Fig. 5 zeigt schematisch den Aufbau eines dritten Ausführungsbeispiels des erfindungsgemäßen Wetterradars, das einen TX Sample Kanal aufweist.

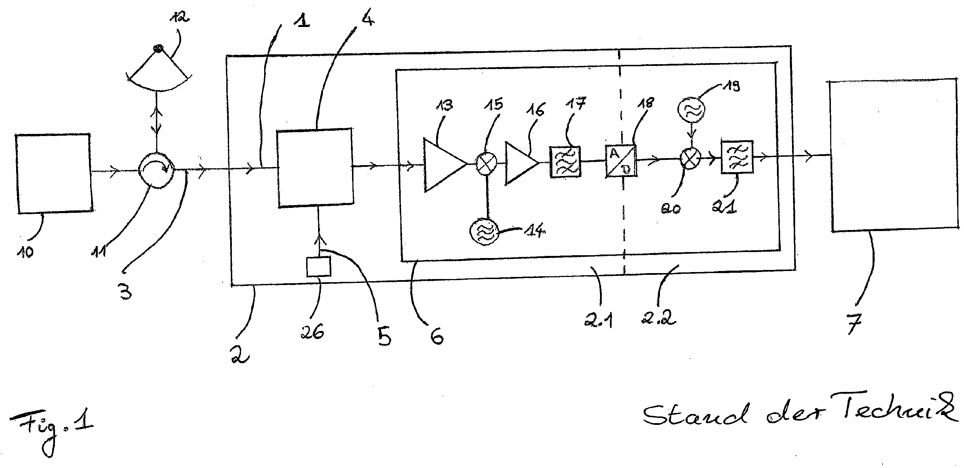

In Fig. 1 ist der Aufbau eines Wetterradars nach dem Stand der Technik schematisch dargestellt. Ein von einem Sender 10 generierter Radarpuls ist in einem Sendeintervall über einen Duplexer 11 einer Antenne 12 zuführbar. In der anschließenden Empfangsphase ist das zurückgestreute, von der Antenne 12 empfangene Radarsignal 3 durch den Duplexer 11 der Empfangseinrichtung des Wetterradar-Empfängers 2 zuführbar. Auf dem Signalweg 1 innerhalb des Empfängers 2 ist dem Radarsignal 3 über einen Koppler 4 ein von einem Testsignal-Generator 26 erzeugtes Testsignal 5 überlagerbar. Nach dem Stand der Technik entspricht dabei die Frequenz des Testsignals 5 der des Radarsignals 3. Anschließend sind die beiden überlagerten Signale 3, 5 zum Verstärken, Filtern und Umsetzen beider Signale 3, 5 der Verarbeitungseinrichtung 6 zuführbar.

Übliche Verarbeitungsschritte innerhalb der Verarbeitungseinrichtung 6 sind eine Vorverstärkung des GHz-Signals durch einen rauscharmen Verstärker (Low Noise Amplifier) 13, das Umsetzen des hochfrequenten Signals auf eine Zwischenfrequenz im MHz-Bereich mit Hilfe eines stabilen lokalen Oszillators (STALO) 14 und eines Mischers 15, sowie die Verstärkung und Filterung des Zwischenfrequenzsignals durch einen Zwischenfrequenzverstärker (Intermediate Frequency Amplifier) 16 und einen Anti-Alias Filter 17. In modernen Wetterradaren erfolgt die Digitalisierung der Signale bereits im Zwischenfrequenzbereich. Der dazu verwendete Analog-/Digitalwandler 18 teilt den Empfänger 2 in einen analogen Abschnitt 2.1 und einen digitalen Abschnitt 2.2. Anschließend sind die digitalisierten Signale mit Hilfe eines Digital Downconverters (DDC) umfassend einen numerischen Oszillator 19 und einen weiteren Mischer 20 ins Basisband umsetzbar und mit einem Matched Filter 21 filterbar. Neben den genannten Komponenten kann die Verarbeitungseinrichtung 6 weitere Komponenten zur Signalverarbeitung enthalten. Die so verarbeiteten Signale sind der Auswerteeinrichtung 7 zuführbar.

In der Auswerteeinrichtung 7 sind aus dem Testsignal 5 Kalibrierungsparameter des Signalwegs 1, wie beispielsweise Rauschen und Verstärkung, für die Frequenz des Testsignals 5 ableitbar, die der Bestimmung der Signalstärke des eingehenden Radarsignals 3 dienen. Da das Testsignal 5 nach dem Stand der Technik die gleiche Frequenz aufweist wie das Radarsignal 3 muss während dieser Bestimmung entweder die Empfangseinrichtung des Empfängers 2 blockiert sein, oder die Antenne 12 in eine Position gefahren sein, in der keine Rückstreusignale empfangbar sind, damit das Radarsignal 3 nicht die Messung des Testsignals 5 beeinflusst.

Methoden zur Bestimmung der Kalibrierungsparameter Rauschen und Verstärkung des Empfängers 2 können wie folgt beschrieben werden.

Der Empfänger 2 enthält einen Signalweg 1 zur Verstärkung, Filterung und Umsetzung auf niedrigere Frequenzen des Radarsignals 3 und des Testsignals 5. Das Ausgangssignal $S_E$ eines linear verstärkenden Empfängers 2 kann näherungsweise beschrieben werden durch

$$S_E = V_E \cdot S_A + N,$$

wobei $V_E$ die Verstärkung des Empfängers 2, $S_A$ die Signalstärke des zurückgestreuten, von einer Antenne empfangenen, in den Empfänger eingehenden Radarsignals 3 und $N$ das Rauschen des Ausgangssignals beschreibt. Um die Signalstärke $S_A$ des Radarsignals 3 aus dem Ausgangssignal $S_E$ des Empfängers 2 zu bestimmen, müssen die Kalibrierungsparameter des Signalwegs 1, $V_E$ und $N$, bestimmt sein. Wenn ein Wetterradar-Empfänger mehrere Signalwege aufweist, können die Kalibrierungsparameter für jeden einzelnen Signalweg 1 unterschiedliche Werte annehmen. Erst wenn sämtliche Kalibrierungsparameter bekannt sind, ist aus dem Ausgangssignal $S_E$ des Empfängers 2 die Signalstärke des die Information enthaltenden eingehenden Radarsignals $S_A$ bestimmbar.

Das Rauschen $N$ kann nach dem Stand der Technik mit dem sogenannten "Noise-Sampling"-Verfahren bestimmt werden. Dazu wird die Antenne 12 auf eine vorher definierte, geneigte Position gestellt und der Sender 10 entweder gestoppt oder die Messung bei laufendem Sender 10 auf Raumzellen begrenzt, die aufgrund der Neigung der Antenne 12 keine Rückstreusignale mehr enthalten. Da in beiden Fällen das Radarsignal 3 von der Antenne 12 keine Information enthält ($S_A = 0$) kann dann für einen definierten Zeitraum direkt der Pegel des Rauschens N gemessen werden ($S_E = N$).

Die Verstärkung $V_E$ des linear verstärkenden Empfängers 2 kann durch die sogenannte Single Point Calibration bestimmt werden. Dazu wird ein Testsignal 5 mit einer Frequenz, die der des Radarsignals 3 entspricht, und einer wählbaren Signalstärke $S_T$ mit einem Koppler 4 in den Signalweg 1 eingespeist. Dieser Koppler 4 kann auch als Schalter ausgeführt sein, mit dem der Eingang des zu kalibrierenden Empfängers 2 zwischen dem Radarsignal 3 und dem Testsignal 5 umgeschaltet wird. Wählt man die Signalstärke $S_T$ des Testsignals 5 so groß, dass das Rauschen $N$ des Empfängers 2 vernachlässigt werden kann, so erhält man mit einem bekannten Koppelverlustfaktor $K_T$ des Kopplers 4 die Relation $S_E \approx V_E \cdot K_T \cdot S_T$, aus der die Verstärkung $V_E$ des Empfängers 2 berechnet werden kann. Enthält der Empfänger 2 einen Analog-/Digital-Wandler, so liegt das Signal am Ausgang des Empfängers 2 bereits in digitaler Form an. In diesem Fall kann die Kalibrierung der Verstärkung gleichzeitig zur Normierung der willkürlichen digitalen Einheiten auf Leistung verwendet werden.

Wird ein nicht-linear verstärkender (beispielsweise logarithmischer) Empfänger 2 verwendet, so genügt eine Single Point Calibration im Allgemeinen nicht, sondern es muss die Verstärkung für dessen gesamten Dynamikbereich kalibriert werden.

Nach dem Stand der Technik muss bei diesen Verfahren zur Bestimmung der Kalibrierungsparameter eines Signalwegs 1, wie beispielsweise Rauschen und Verstärkung, die Aufnahme der Messdaten für den Zeitraum der Kalibrierung unterbrochen werden. Dies geschieht entweder in einer separaten Kalibrierungsphase oder aber im Pulsbetrieb, indem bestimmte Entfernungszellen, in die Empfangsperiode aufgeteilt ist, für die Kalibrierung reserviert werden.

Die Werte der Kalibrierungsparameter sind abhängig von äußeren Einflüssen. Das Rauschen setzt sich zusammen aus dem Hintergrund- oder Antennenrauschen, das das Wetterradar empfängt und dem Eigenrauschen des Empfängers 2, charakterisiert durch die sogenannte Rauschzahl. Es ist damit u.a. abhängig von der Antennenposition, der Tages- und der Jahreszeit, aber auch von der Temperatur. Die Verstärkung des Empfängers 2 ist ebenfalls eine zeitlich veränderliche Größe, die sich beispielsweise durch thermisch bedingte Driften ändert. Außerdem hängen die Kalibrierungsparameter eines Signalwegs 1 von der Frequenz des zu verarbeitenden Signals ab. Aus diesen Gründen ist es notwendig die Kalibrierungsparameter möglichst häufig und für beliebige Antennenpositionen zu bestimmen, damit die zu verschiedenen Zeitpunkten und aus verschiedenen Raumrichtungen aufgenommenen Daten vergleichbar sind.

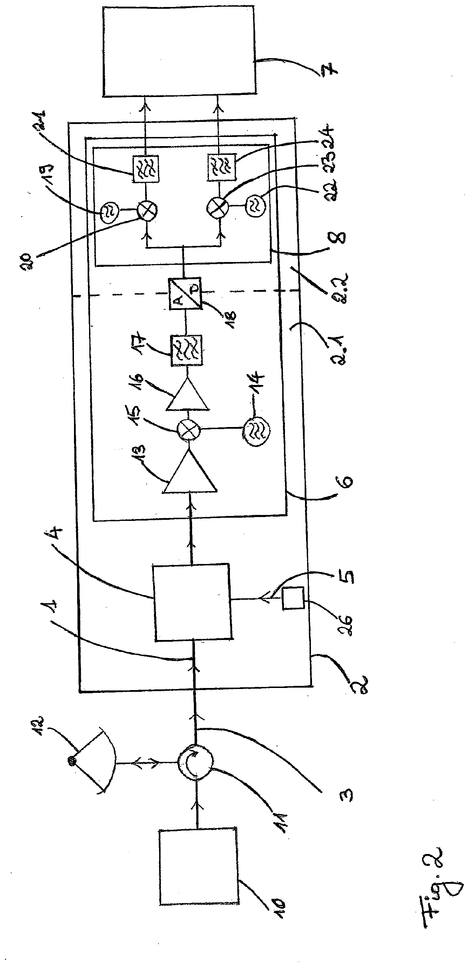

Der Gegenstand der vorliegenden Erfindung unterscheidet sich von dem vorstehend beschriebenen Stand der Technik, wie nachfolgend beschrieben wird: Fig. 2 zeigt ein erstes Ausführungsbeispiel des erfindungsgemäßen Wetterradars. Wie vorstehend dargelegt ist zum Messen von Radarsignalen im GHz Bereich ein Sender 10 vorgesehen, der einen Radarimpuls generiert. Dieser Radarimpuls ist über einen Duplexer 11 einer Antenne 12 zuführbar. In der anschließenden Empfangsphase ist das zurückgestreute, von der Antenne 12 empfangene Radarsignal 3 durch den Duplexer 11 der Empfangseinrichtung 2 zuführbar. Auf dem mindestens einen Signalweg 1 innerhalb des Empfängers 2 ist dem Radarsignal 3 über einen Koppler 4 ein von einem Testsignal-Generator 26 erzeugtes Testsignal 5 überlagerbar. Im Unterschied zum Stand der Technik ist dem Radarsignal 3 ein Testsignal 5 in dem Koppler 4 überlagerbar, das mindestens eine vom Radarsignal 3 verschiedene Frequenz aufweist. Das Radarsignal 3 und das Testsignal 5 sind so von der Auswerteeinrichtung 7 getrennt voneinander verarbeitbar. Die Kalibrierungsparameter des Signalwegs 1 für die Frequenz des Radarsignals 3 können durch eine Modellierung der Frequenzabhängigkeit der Kalibrierungsparameter für Frequenzen um solche des Radarsignals 3 aus dem Testsignal 5 bestimmt werden. Dies wird nachstehend im einzelnen erläutert.

Im einfachsten Fall hat das Testsignal 5 nur eine Frequenz $f_T$, die um einen Frequenzversatz $\Delta f$ von der Radarfrequenz $f_R$ abweicht, also $f_T = f_R + \Delta f$ oder $f_T = f_R - \Delta f$. Das Radarsignal 3 durchläuft überlagert mit dem Testsignal 5 die nachfolgende Verarbeitungseinrichtung 6 des Empfängers. Nach verschiedenen Verarbeitungsschritten ist das Testsignal 5 innerhalb der Verarbeitungseinrichtung 6 wieder von dem Radarsignal 3 trennbar, so dass die Signale 3, 5 in einer sich anschließenden Auswerteeinrichtung 7 getrennt voneinander verarbeitbar sind. Die Kalibrierungsparameter des Signalwegs 1 für die Frequenz des Radarsignals 3 sind dann durch eine Modellierung der Frequenzabhängigkeit der Kalibrierungsparameter für Frequenzen um solche des Radarsignals 3 aus dem Testsignal 5 in der Auswerteeinrichtung 7 bestimmbar.

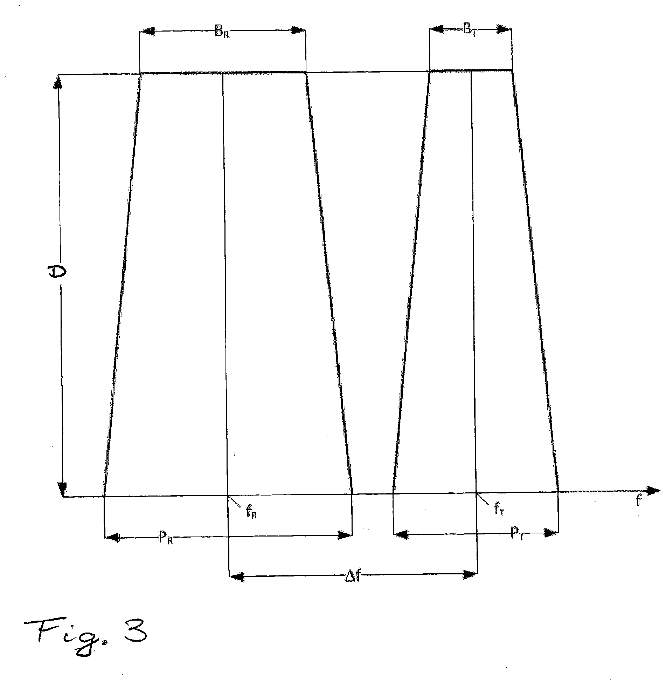

Zur Trennung der überlagerten Signale 3, 5 ist innerhalb der Verarbeitungseinrichtung 6 eine Splitt-Einrichtung 8 dadurch ausgebildet, dass ein zweiter Messkanal für die Frequenz des Testsignals im Empfänger 2 realisiert ist, der einen entsprechenden Frequenzversatz zum Hauptkanal auf der Radarfrequenz aufweist. Die Trennung der Signale erfolgt vorzugsweise am Ende der Verarbeitungseinrichtung 6, damit sämtliche Komponenten des Empfängers 2, die zu dessen Rauschen beitragen und die driften können, mit erfasst werden. Dazu wird vorzugsweise der Datenstrom des Analog-/Digital-Wandlers 18 aufgeteilt und es finden zwei Digitale Downconverter Verwendung, die numerische Oszillatoren 19, 22 umfassen, die jeweils so einstellbar sind, dass sie das Radarsignal 3 und das Testsignal 5 mit Hilfe von Mischern 20, 23 in deren jeweiliges Basisband umsetzen. Aus den umgesetzten Signalen ist das Radarsignal 3 durch den Matched Filter 21 und das Testsignal 5 durch den Testsignal-Filter 24 extrahierbar, die dann getrennt voneinander und parallel der Auswerteeinrichtung 7 zuführbar sind. Die Filter 21, 24 können alternativ auch zwischen dem Analog-/Digital-Wandler 18 und den DDCs implementiert sein. In beiden Fällen bestimmt der Matched Filter 21 die Bandbreite des Radarsignal-Kanals und der Testsignal-Filter 24 die Bandbreite des Testsignal-Kanals innerhalb derer die Frequenzen des Radarsignals 3 und des Testsignals 5 wählbar sind. Vorzugsweise sind die Frequenzen des Radarsignals 3 bzw. des Testsignals 5 im Bereich der Mittenfrequenzen des Radarkanals bzw. des Testsignal-Kanals gewählt. Die Bandbreiten der Kanäle $B_R$, $B_T$ können unterschiedlich sein. In diesem Fall sollte der Bandbreitenunterschied dann in der Auswerteeinrichtung 7 Berücksichtigung finden. Ein Beispiel für die Lagen der Passbänder $P_R$, $P_T$ von Matched Filter 21 und Testsignal-Filter 24 und der Bandbreiten der Kanäle $B_R$, $B_T$ ist in Fig. 3 über den Dynamikbereich $D$ des Empfängers 2 dargestellt.

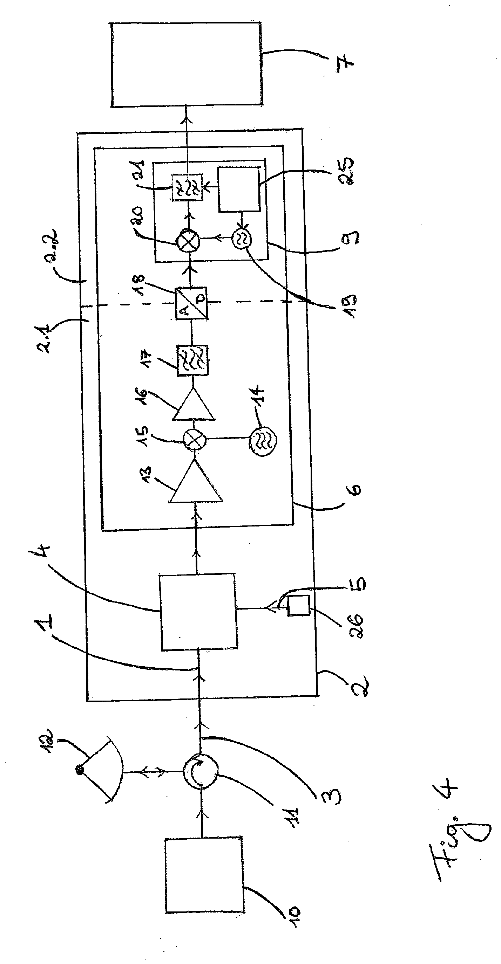

Ein zweites Ausführungsbeispiel eines erfindungsgemäßen Wetterradars zeigt Fig. 4. Mit dem Koppler 4 ist dem Radarsignal 3 ein Testsignal 5 mit mindestens einer von der Radarfrequenz verschiedenen Frequenz überlagerbar. Die Trennung der Signale erfolgt mittels einer Switch-Einrichtung 9. Über einen Frequenz-Switch 25 ist die Frequenz des numerischen Oszillators 19 so steuerbar, dass aus dem überlagerten Signal zyklisch die Radarfrequenz und die mindestens eine Testfrequenz ins Basisband umgesetzt wird. In dieser Ausführung durchlaufen beide Signale 3, 5 auf dem Signalweg 1 den gleichen Matched Filter 21. Auf diese Weise ist das der Auswerteeinrichtung 7 zugeführte Signal zwischen Testsignal 5 und Radarsignal 3 umschaltbar. Enthält das Testsignal 5 dabei nur eine von der Radarfrequenz verschiedene Frequenz muss dazu der numerische Oszillator 19 zyklisch für die Dauer von einem oder mehreren Sendepulsen um den entsprechenden Frequenzversatz zur Radarfrequenz verstimmt werden. Für die entsprechenden Empfangsintervalle ist dann das Testsignal 5 auf der mindestens einen Testfrequenz empfangbar. Die empfangenen Signale sind als Testdaten zu markieren, von der operationellen Datenverarbeitung auszuschließen und nur für die Kalibrierung und Validierung zu verwenden. In dieser vereinfachten Variante ist kein zusätzlicher Messkanal realisiert und es wird kein zusätzlicher Filter benötigt. Allerdings ist die Messdatenaufnahme während der Registrierung der Testdaten unterbrochen, doch vorteilhaft verbleibt, dass die Kalibrierungsparameter für beliebige Antennenpositionen bestimmbar sind und über den gesamten jeweiligen Entfernungsbereich zur Verfügung stehen können. Im übrigen gelten die vorstehenden Ausführungen zum ersten Ausführungsbeispiel hier entsprechend.

In einem nicht dargestellten alternativen Ausführungsbeispiel ist die Splitt-Einrichtung 8 anders als im ersten Ausführungsbeispiel aufgebaut. In diesem Fall wird der Datenstrom des Analog-/Digital Wandlers nicht aufgeteilt und das überlagerte Signal mit einem DDC in das Basisband eines der beiden Signale 3, 5 herabgemischt. Anschließend ist das überlagerte Signal über parallele Filterbearbeitung (beispielsweise mit einem Tiefpass- und einem Bandpass-Filter) in Radarsignal 3 und Testsignal 5 auftrennbar. Auch in diesem Ausführungsbeispiel sind Radarsignal 3 und Testsignal 5 parallel von der Auswerteeinrichtung 7 verarbeitbar. Wenn alternativ statt einer parallelen Filterbearbeitung das der Auswerteeinrichtung 7 zugeführte Signal mit einem Schalter zwischen den beiden gefilterten Signalen zyklisch hin- und herschaltbar ist, entspricht diese Anordnung einem im Vergleich zum zweiten Ausführungsbeispiel alternativen Aufbau einer Switch-Einrichtung 9.

Die Bandbreiten des Radar- und des Testsignalkanals sind durch die Durchlassbereiche der zur Trennung der Signale 3, 5 verwendeten Filter 21, 24 bestimmt. Die Bandbreiten der beiden Kanäle können unterschiedlich sein. Damit sich die beiden Signale 3, 5 auf dem Signalweg 1 des Empfängers 2 nicht gegenseitig beeinflussen können, dürfen sich die Passbänder der Filter 21, 24 nicht überlappen. Daher weisen die Frequenzen des Testsignals 5 und des Radarsignals 3 vorzugsweise einen Frequenzversatz $\Delta f$ auf, der größer ist als die Bandbreiten der Kanäle. Die maximale Größe des Frequenzversatzes $\Delta f$ ist durch die Bandbreite der Verarbeitungseinrichtung 6 des Empfängers 2 bestimmt. Die Bandbreite der Verarbeitungseinrichtung 6 muss so groß sein, dass sowohl das Radarsignal 3 als auch das Testsignal 5 die gesamte Verarbeitungseinrichtung 6 durchlaufen. Die mindestens eine Frequenz des Testsignals 5 weist daher vorzugsweise einen Frequenzversatz $\Delta f$ zur Frequenz des Radarsignals 3 auf, der wählbar ist abhängig von der Bandbreite der Verarbeitungseinrichtung 6 und der jeweilig gewählten Bandbreite des Filters 21. Bevorzugt ist ein Frequenzversatz, der kleiner ist als 10%, besonders bevorzugt kleiner als 5%, der Radar-Zwischenfrequenz.

Zur Modellierung der Frequenzabhängigkeit der Kalibrierungsparameter des mindestens einen Signalwegs 1 können innerhalb der Auswerteeinrichtung 7 unterschiedliche Modelle zum Einsatz kommen.

Für Frequenzversätze $\Delta f$ kleiner als 5% der Radar-Zwischenfrequenz findet vorzugsweise ein Modell Verwendung, in dem die Frequenzabhängigkeit der Kalibrierungsparameter des Signalwegs 1 zwischen den Frequenzen des Radarsignals 3 und des Testsignals 5 als konstant modelliert ist, so dass die Kalibrierungsparameter des Signalwegs 1 für die Testfrequenz als Kalibrierungsparameter des Signalwegs 1 für die Radarfrequenz übernehmbar sind. Dieses Modell ist besonders einfach implementierbar, da es insbesondere keine Hauptkalibrierung erfordert, und weist für kleine Frequenzversätze $\Delta f$ eine hinreichende Genauigkeit auf, da die Kalibrierungsparameter für Frequenzversätze $\Delta f$ in diesem Bereich sich kaum unterscheiden.

Für Frequenzversätze $\Delta f$ größer als 5% der Radar-Zwischenfrequenz kommt innerhalb der Auswerteeinrichtung 7 vorzugsweise ein Modell zum Einsatz, in dem die Frequenzabhängigkeit der Kalibrierungsparameter des Signalwegs 1 als unabhängig von äußeren Einflüssen modelliert ist, sodass aus den Kalibrierungsparametern des Signalwegs 1 für die Frequenz des Radarsignals 3 und des Testsignals 5 gebildete Verhältnisse als zeitlich konstant modelliert sind. Dieses Modell berücksichtigt die Übertragungsfunktion des Empfängers und liefert daher genauere Resultate für größere Frequenzversätze im Vergleich zum Modell konstanter Kalibrierungsparameter.

Dem Modell liegt die Annahme zugrunde, dass die Frequenzabhängigkeit der Kalibrierungsparameter und die Abhängigkeit von anderen Einflüssen separierbar ist, dass also beispielsweise für das Rauschen gilt $N_R(f,T,...) = n_1(f) \cdot n_2(T,...)$, wobei $n_1$ eine Funktion der Frequenz $f$ und $n_2$ eine Funktion der Temperatur $T$ und anderer äußerer Einflussparameter sind. In diesem Modell stehen die Kalibrierungsparameter bei einer Testfrequenz $f_T$ und bei der Radarfrequenz $f_R$ in festen, von den äußeren Gegebenheiten unabhängigen Verhältnissen, da die Abhängigkeit von den äußeren Parametern bei der Verhältnisbildung herauskürzt. Für das Rauschen erhält man beispielsweise: $N_R(f_R,T,...)/N_T(f_T,T,...) = n_1(f_R)/n_1(f_T) = R_N$. Diese Verhältnisse sind für alle Kalibrierungsparameter einmalig in einer Hauptkalibrierung bestimmbar, bei der die Datenaufnahme unterbrochen ist, um die Kalibrierungsparameter auf dem Radar- und dem Testkanal nach den aus dem Stand der Technik bekannten Methoden für die einzelnen Frequenzen zu bestimmen. In der anschließenden operationellen Kalibrierung sind die jeweils aktuellen Werte der Kalibrierungsparameter für die Radarfrequenz durch Multiplikation der aktuellen Kalibrierungsparameter für die Testfrequenz mit diesen Verhältnissen bestimmbar, also beispielsweise für das Rauschen gemäß der Relation $N_R(f_R,T,...) = R_N \cdot N_T(f_T,T,...)$. Da die Kalibrierungsparameter für die Frequenzen des Testsignals fortwährend, ohne Unterbrechung der Datenakquisition messbar sind, ist das Wetterradar auf diese Weise permanent im laufenden Betrieb kalibrierbar. Um die Anwendbarkeit des Modells zu überprüfen und die Verhältnisse gegebenenfalls langfristigen Schwankungen anzupassen kann die Hauptkalibrierung in großen zeitlichen Abständen (beispielsweise monatlich) wiederholt werden. Alternativ ist auch eine Vermessung der Übertragungsfunktion des gesamten Durchlassbereichs des Empfängers 2 möglich, aus welcher die zu $R_N(f_R,f_T)$ analogen Verhältnisse für alle Kalibrierungsparameter und für beliebige Frequenzen $f_R$ und $f_T$ innerhalb des Durchlassbereichs dynamisch ermittelbar sind. In dieser Form ist dieses Modell der Frequenzabhängigkeit auch für Radarsysteme verwendbar, bei denen die Sendefrequenz nicht konstant ist (beispielsweise bei Verwendung eines Magnetronsenders).

Zur Bestimmung der aktuellen Empfängerverstärkung für die Radarfrequenz kann analog ein Verhältnis $R_V$ gebildet werden, das in der operationellen Kalibrierung mit der jeweils aktuellen Verstärkung $V_T$ des Testsignals multiplizierbar ist. Alternativ dazu kann ein Verhältnis zweier Signalstärken $R_S = S_{ER}/S_{ET}$ zur Kalibrierung verwendet werden, das aus den gemessenen Signalstärken gebildet ist, die sich bei Einspeisung eines Signals mit bekanntem Pegel $S_R$ auf der Radarfrequenz $f_R$ und eines Signals mit konstantem Signalpegel $S_T$ auf der Testsignal-Frequenz $f_T$ am Ausgang des Empfängers in einer Hauptkalibrierung ergeben. Das Testsignal 5 mit konstantem Signalpegel $S_T$ ist permanent einspeisbar, so dass der aktuelle Kalibrierungsfaktor $S_{ER}$ durch Multiplikation von $R_S$ mit dem aktuellen Wert von $S_{ET}$ erhalten werden kann. Zur Kalibrierung des Empfängers 2 ist dann ferner der bekannte Koppelverlustfaktor $K_T$ derart zu berücksichtigen, dass wenn ein Pegel $S_R$ am Testsignal-Eingang des Kopplers 4 zu einer Signalstärke $S_{ER}$ am Ausgang des Empfängers 2 führt ($S_{ER} \hat{=} S_R$ am Testsignal-Eingang), dies einer Signalstärke $S_R/K_T$ am Radarsignaleingang des Kopplers 4 entspricht ($S_{ER} \hat{=} S_R/K_T$ am Radarsignal-Eingang). Auf diese Weise ist der Empfänger 2 bezogen auf das Radareingangs-Tor des Testsignal-Kopplers 4 kalibrierbar.

Zur besonders genauen Bestimmung der Kalibrierungsparameter des Signalwegs 1 für die Frequenz des Radarsignals 3 ist vorzugsweise ein Testsignal 5 einspeisbar, das mindestens zwei Frequenzen aufweist. Für jede Frequenz des Testsignals 5 ist ein gesonderter Testsignal-Kanal im Empfänger 2 realisiert, so dass die Kalibrierungsparameter des Signalwegs 1 für jede dieser Frequenzen bestimmbar sind. Vorzugsweise liegt je mindestens eine der Frequenzen des Testsignals 5 oberhalb und unterhalb der Frequenz des Radarsignals 3. In dieser Ausführungsform findet vorzugsweise ein Modell der Frequenzabhängigkeit der Kalibrierungsparameter in der Auswerteeinrichtung 7 Verwendung, das die Frequenzabhängigkeit der Kalibrierungsparameter des Signalwegs 1 durch Interpolation bzw. Extrapolation modelliert. Aus den fortwährend separat bestimmbaren Kalibrierungsparametern des Signalwegs 1 für die Testfrequenzen sind die Kalibrierungsparameter des Signalwegs 1 für die Radarfrequenz dann durch Interpolation bzw. Extrapolation bestimmbar. Die Notwendigkeit einer Hauptkalibrierung entfällt damit und es ergibt sich die Möglichkeit einer Plausibilitätskontrolle durch Vergleich der aus den verschiedenen Testsignal-Kanälen erhaltenen Kalibrierungsparameter. Ungewöhnlich große Unterschiede der Kalibrierungsparameter auf den verschiedenen Testsignal-Kanälen weisen in diesem Fall auf eine nicht ordnungsgemäße Funktion des Wetterradars hin.

Gemäß einem nicht dargestellten Ausführungsbeispiel kann der Einspeise-Koppler 4 als Diplexer ausgeführt sein. Ein Diplexer kann mehrere Signale mit unterschiedlichen Frequenzen zusammenführen oder auf ihre Frequenzen aufteilen. Seine Einfügungsdämpfung ist wesentlich geringer als die eines Kopplers.

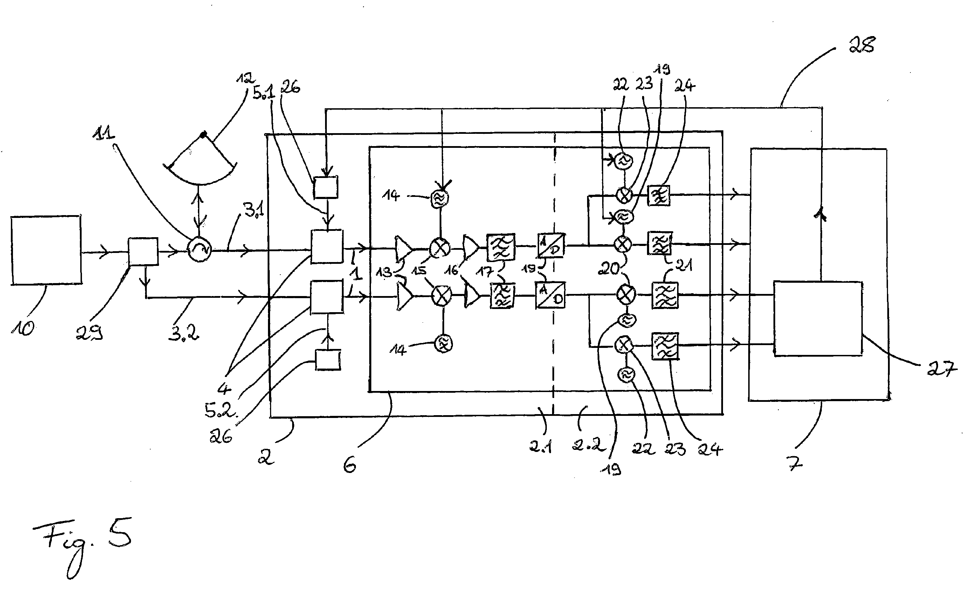

Gemäß einem dritten Ausführungsbeispiel, das in Fig. 5 dargestellt ist, ist das Wetterradar mit einem TX-Sample Kanal ausgestattet, so dass der Empfänger 2 einen zusätzlichen Signalweg 1 für den TX Sample Kanal aufweist. Die Ausbildung eines TX Sample Kanals ermöglicht die Messung der Frequenz, der Phase und der Leistung jedes Sendepulses. Dafür ist das zu messende Signal des Radarpulses 3.2 über einen Koppler 29 in der Senderleitung auskoppelbar und der Empfangseinrichtung des Empfängers 2 getrennt von dem zurückgestreuten, von der Antenne 12 empfangenen Radarsignal 3.1 zuführbar. Da der TX Sample Kanal als vollwertiger Empfängerkanal auf einem Signalweg 1 den Empfänger 2 durchläuft, weist er ähnliche Driftcharakteristika wie die übrigen Empfangskanäle auf und seine Kalibrierungsparameter sind ebenfalls erfindungsgemäß im laufenden Betrieb bestimmbar.

Die Ausbildung und erfindungsgemäße Kalibrierung eines TX Sample Kanals ist insbesondere dann bevorzugt, wenn das Wetterradar mit einem Sender 10 ausgestattet ist, dessen Frequenz veränderbar ist, so dass die Frequenz des Radarpulses 3.2 und damit auch die des eingehenden Radarsignals 3.1 während des Betriebs nicht konstant ist. Dies ist beispielsweise bei einem Magnetron-Sender der Fall. Weil ein Magnetron ein Hochleistungs-Mikrowellenoszillator ist, dessen Frequenz über einen Hohlraumresonator einstellbar ist, hängt die Sendefrequenz von der Temperatur der verwendeten Elektronenröhre und der des Resonators ab. Da sich die Temperatur im laufenden Betrieb verändert, ist auch die Sendefrequenz nicht konstant. Vorzugsweise ist deshalb die Signalverarbeitung innerhalb der Verarbeitungseinrichtung 6 der sich im Zeitverlauf ändernden Frequenz des Radarsignals 3.1 anpassbar ausgebildet. Dazu sind die Mittenfrequenzen des Radarkanals und des Testsignalkanals der Sendefrequenz des Radarpulses 3.2 nachführbar gestaltet.

Dies kann durch eine Automatic Frequency Control (AFC) Funktion geschehen. Dabei ist die aktuelle Sendefrequenz, die beispielsweise über einen TX Sample Kanal messbar ist, innerhalb des digitalen Empfängers 2.2 oder in einem dafür ausgebildeten Abschnitt 27 der Auswerteeinrichtung 7 bestimmbar. Über eine Rückkopplungsleitung 28 ist nun entweder die Frequenz des STALO 14 oder die Frequenz des numerischen Oszillators 19 derart steuerbar, dass die Position des Radarsignals 3 innerhalb des Durchlassbereiches des Matched Filters 21, vorzugsweise im Bereich dessen Mittenfrequenz, verbleibt. Bei Verstellung eines externen Oszillators wie des STALOs 14 in seiner Frequenz ist das Radarsignal 3.1 auf eine festliegende Eingangsfrequenz des digitalen Empfängers 2.2 umsetzbar, während die Eingangsfrequenz des digitalen Empfängers 2.2 des Radarsignals 3.1 im Falle numerischer AFC (Nachsteuerung des numerischen Oszillators 19) variiert. Diese Variation ist dann innerhalb des digitalen Empfängers 2.2 zyklisch durch eine entsprechende Variation der Frequenz des numerischen Oszillators 19 zu berücksichtigen.

Um eine Überlappung der Passbänder des Matched Filters 21 und des Testsignal-Filters 24 innerhalb der Bandbreite der Verarbeitungseinrichtung 6 zu verhindern, können die Frequenzen des Testsignals 5.1 der Frequenz des Radarsignals 3.1 ebenfalls über eine Rückkopplungsleitung 28 nachführbar sein. Im Falle numerischer AFC ist dann auch die Frequenz des zweiten numerischen Oszillators 22 entsprechend variierbar, so dass die Position des Testsignals 5.1 innerhalb des Durchlassbereiches des Testsignal-Filters 24, vorzugsweise im Bereich dessen Mittenfrequenz, verbleibt. Wenn die Bandbreite der Verarbeitungseinrichtung 6 weit genug ist, kann die Frequenz des Testsignals 5.1 außerhalb der Schwankungsbreite der Frequenz des Radarsignals 3.1 gewählt werden. In diesem Fall muss die Frequenz des Testsignals 5.1 nicht nachgeführt werden.

Über den Testsignal-Generator 26 kann eine beliebige Form des Testsignals 5 vorgebbar sein. Dadurch kann der Testsignal-Kanal zur Simulation von Wetterbedingungen genutzt werden und damit die bestimmungsgemäße Funktion des Wetterradars im laufenden Betrieb überprüft werden.

Zusätzlich kann die Erfindung operationelle parallele zum Beispiel radiometrische Vermessungen oder Vermessungen mit externen Quellen bei beliebigen Antennenpositionen gestatten, welche bislang nicht möglich waren. So kann beispielsweise zusätzlich zur Radarfrequenz auf der Testfrequenz empfangen werden, ohne dass ein Testsignal in den Signalweg eingespeist wird.

Weiterhin können zur Modellierung der Frequenzabhängigkeit der einzelnen Kalibrierungsparameter eines Signalwegs im Empfänger unterschiedliche Modelle Verwendung finden. So könnte beispielsweise für das Rauschen das Modell konstanter Frequenzabhängigkeit und für die Verstärkung ein Interpolationsmodell verwendet werden.

Die Digitalisierung des Radar- und des Testsignals kann statt im Zwischenfrequenz-Bereich des Empfängers auch erfolgen nachdem beide Signale ins Basisband umgesetzt sind. In diesem Fall erfolgt die Umsetzung der beiden Signale ins Basisband mit Hilfe eines weiteren lokalen Oszillators, der als analoges Bauteil die Funktionen des numerischen Oszillators übernimmt. Der zur Digitalisierung verwendete Analog-Digital Wandler kann dann im Basisband-Bereich des Empfängers oder in der Auswerteeinrichtung angeordnet sein.

**Patentansprüche**

1. Wetterradar zum Messen von Radarsignalen im GHz-Bereich mit einem mindestens einen Signalweg (1) enthaltenden Empfänger (2), umfassend eine Empfangseinrichtung für ein eingehendes Radarsignal (3), dem in einem Koppler (4) ein von einem Testsignal-Generator (26) erzeugtes Testsignal (5) überlagerbar ist und eine Verarbeitungseinrichtung (6) zum Verstärken, Filtern und Umsetzen beider Signale auf niedrigere Frequenzen, wobei zum Filtern ein Matched Filter (21) vorgesehen ist, und mit einer Auswerteeinrichtung (7), in der aus dem Testsignal (5) Kalibrierungsparameter des Signalwegs (1) für die Frequenz des Testsignals ableitbar sind zur Bestimmung der Signalstärke des eingegangenen Radarsignals (3), wobei das Testsignal (5) mit mindestens einer vom Radarsignal (3) verschiedenen Frequenz überlagerbar ist, so dass das Radarsignal (3) und das Testsignal (5) von der Auswerteeinrichtung (7) getrennt voneinander verarbeitbar sind, und die Kalibrierungsparameter des Signalwegs (1) für die Frequenz des Radarsignals (3) durch eine Modellierung der Frequenzabhängigkeit der Kalibrierungsparameter für Frequenzen um solche des Radarsignals (3) aus dem Testsignal (5) bestimmbar sind.

2. Wetterradar nach Anspruch 1, **dadurch gekennzeichnet, dass** der Empfänger (2) eine Splitt-Einrichtung (8) aufweist, durch die das Testsignal (5) und das Radarsignal (3) voneinander trennbar und parallel der Auswerteeinrichtung (7) zuführbar sind.

3. Wetterradar nach Anspruch 1, **dadurch gekennzeichnet, dass** der Empfänger eine Switch-Einrichtung (9) aufweist, mit der das der Auswerteeinrichtung (7) zugeführte Signal zwischen Testsignal (5) und Radarsignal (3) umschaltbar ist.

4. Wetterradar nach einem der Ansprüche 1 bis 3, **dadurch gekennzeichnet, dass** die Frequenzen des Testsignals (5) und des Radarsignals (3) einen Frequenzversatz ($\Delta f$) aufweisen, der wählbar ist abhängig von der Bandbreite der Verarbeitungseinrichtung (6).

5. Wetteradar nach einem Ansprüche 1 bis 4, **dadurch gekennzeichnet, dass** die Verarbeitungseinrichtung (6) die beiden Signale (3, 5) auf Zwischenfrequenzen umsetzt.

6. Wetterradar nach Anspruch 5, **dadurch gekennzeichnet, dass** der Frequenzversatz ($\Delta f$) kleiner als 10%, insbesondere kleiner als 5%, der Zwischenfrequenz des Radarsignals ist.

7. Wetterradar nach einem der Ansprüche 1 bis 6, **dadurch gekennzeichnet, dass** die Frequenzabhängigkeit der Kalibrierungsparameter des mindestens einen Signalwegs (1) als konstant modellierbar ist im Frequenzbereich zwischen den Frequenzen des Radarsignals (3) und des Testsignals (5).

8. Wetterradar nach einem der Ansprüche 1 bis 6, **dadurch gekennzeichnet, dass** die Frequenzabhängigkeit der Kalibrierungsparameter des mindestens einen Signalwegs (1) als unabhängig von äußeren Einflüssen modellierbar ist, sodass aus den Kalibrierungsparametern des mindestens einen Signalwegs (1) für die Frequenz des Radarsignals (3) und für die Frequenz des Testsignals (5) gebildete Verhältnisse zeitlich konstant modelliert sind.

9. Wetterradar nach einem der Ansprüche 1 bis 6, **dadurch gekennzeichnet, dass** das Testsignal (5) mindestens zwei Frequenzen aufweist, die jeweils verschieden sind der Frequenz des Radarsignals (3), und die Frequenzabhängigkeit der Kalibrierungsparameter des mindestens einen Signalwegs (1) durch Interpolation bzw. Extrapolation der für die Testsignal-Frequenzen erhaltenen Kalibrierungsparameter modellierbar ist.

10. Wetterradar nach einem der Ansprüche 1 bis 9, **dadurch gekennzeichnet, dass** der Koppler (4) als Diplexer ausgebildet ist.

11. Wetterradar nach einem der Ansprüche 1 bis 10, **dadurch gekennzeichnet, dass** der Empfänger (2) einen Signalweg (1) eines TX Sample Kanals aufweist.

12. Wetterradar nach Anspruch 11, **dadurch gekennzeichnet, dass** für eine zeitlich veränderbare Frequenz des Radarsignals (3) ein Sender (10) vorgesehen ist und die Signalverarbeitung innerhalb der Verarbeitungseinrichtung (6) der sich im Zeitverlauf ändernden Frequenz des Radarsignals (3) über eine Rückkopplungsleitung (28) anpassbar ist.

13. Wetterradar nach Anspruch 12, **dadurch gekennzeichnet, dass** der Sender (10) als Magnetron-Sender ausgebildet ist.

14. Wetterradar nach Anspruch 12 oder 13, **dadurch**

**gekennzeichnet, dass** die mindestens eine Frequenz des Testsignals (5) der Frequenz des Radarsignals (3) über eine Rückkopplungsleitung (28) nachführbar ist.

15. Wetterradar nach einem der Ansprüche 1 bis 14, **dadurch gekennzeichnet, dass** die Form des Testsignals (5) durch einen Testsignalgenerator (26) vorgebbar ist zur Simulation von Wetterbedingungen und zur Kontrolle der bestimmungsgemäßen Funktion des Wetterradars.

**Claims**

1. A Weather radar for measuring radar signals in the GHz range with a receiver (2) containing at least one signal path (1), the receiver comprising a receiving facility for an incoming radar signal (3), on which a test signal (5) generated by a test signal generator (26) can be superimposed in a coupler (4), and a processing device (6) to amplify, filter and convert both signals to lower frequencies, wherein for filtering a matched filter (21) is provided, and with an evaluation device (7) in which calibration parameters of the signal path (1) can be derived from the test signal (5) for the frequency of the test signal in order to determine the signal strength of the received radar signal (3), wherein the test signal (5) can be superimposed with at least one frequency differing from the frequency of the radar signal (3), so that the radar signal (3) and the test signal (5) can be processed separately from one another by the evaluation device (7), and the calibration parameters of the signal path (1) for the frequency of the radar signal (3) are determinable from the test signal (5) through a modeling of the frequency dependence of the calibration parameters for frequencies around those of the radar signal (3).

2. The weather radar according to claim 1, **characterized in that** the receiver (2) has a splitting device (8) by means of which the test signal (5) and the radar signal (3) can be separated from one another and can be fed in parallel to the evaluation device (7).

3. The weather radar according to claim 1, **characterized in that** the receiver has a switch device (9) with which the signal fed to the evaluation device (7) can be switched over between the test signal (5) and the radar signal (3).

4. The weather radar according to one of claims 1 to 3, **characterized in that** the frequencies of the test signal (5) and the radar signal (3) have a frequency offset ($\Delta f$) which is selectable depending on the bandwidth of the processing device (6).

5. The weather radar according to one of claims 1 to 4, **characterized in that** the processing device (6) converts the two signals (3, 5) to intermediate frequencies.

6. The weather radar according to claim 5, **characterized in that** the frequency offset ($\Delta f$) is less than 10 %, in particular less than 5 %, of the intermediate frequency of the radar signal.

7. The weather radar according to one of claims 1 to 6, **characterized in that** the frequency dependence of the calibration parameters of the at least one signal path (1) can be modeled as being constant in the frequency range between the frequencies of the radar signal (3) and the test signal (5).

8. The weather radar according to one of claims 1 to 6, **characterized in that** the frequency dependence of the calibration parameters of the at least one signal path (1) can be modeled as being independent from external influences, so that ratios formed from the calibration parameters of the at least one signal path (1) for the frequency of the radar signal (3) and for the frequency of the test signal (5) are modeled as being constant over time.

9. The weather radar according to one of claims 1 to 6, **characterized in that** the test signal (5) has at least two frequencies, each of which differ from the frequency of the radar signal (3), and the frequency dependence of the calibration parameters of the at least one signal path (1) is modeled through interpolation or extrapolation of the calibration parameters obtained for the test signal frequencies.

10. The weather radar according to one of claims 1 to 9, **characterized in that** the coupler (4) is designed as a diplexer.

11. The weather radar according to one of claims 1 to 10, **characterized in that** the receiver (2) has a signal path (1) of a TX sample channel.

12. The weather radar according to claim 11, **characterized in that** a transmitter (10) is provided for a time-variable frequency of the radar signal (3) and the signal processing within the processing device (6) is adaptable via a feedback line (28) to the frequency of the radar signal (3) changing over time.

13. The weather radar according to claim 12, **characterized in that** the transmitter (10) is designed as a magnetron transmitter.

14. The weather radar according to claim 12 or 13, **characterized in that** the at least one frequency of the test signal (5) can be controlled to follow-up the frequency of the radar signal (3) via a feedback line (28).

**15.** The weather radar according to one of claims 1 to 14, **characterized in that** the shape of the test signal (5) is predefinable by a test signal generator (26) to simulate weather conditions and to check the correct function of the weather radar.

## Revendications

**1.** Radar météorologique pour la mesure de signaux radar dans le domaine des GHz avec un récepteur (2) contenant au moins un chemin de signal (1), comprenant un dispositif de réception pour un signal radar (3) entrant, auquel un signal de test (5) généré par un générateur de signal de test (26) peut être superposé dans un coupleur (4) et un dispositif de traitement (6) pour l'amplification, le filtrage et la conversion des deux signaux à des fréquences plus faibles, dans lequel un filtre adapté (21) est prévu pour le filtrage, et avec un dispositif d'évaluation (7), dans lequel des paramètres de calibrage du chemin de signal (1) pour la fréquence du signal de test peuvent être dérivés à partir du signal de test (5) pour la détermination de l'intensité de signal du signal radar (3) entré, dans lequel le signal de test (5) peut être superposé avec au moins une fréquence différente du signal radar (3) de sorte que le signal radar (3) et le signal de test (5) puissent être traités séparément l'un de l'autre par le dispositif d'évaluation (7), et les paramètres de calibrage du chemin de signal (1) pour la fréquence du signal radar (3) peuvent être déterminés par une modélisation de la dépendance de fréquence des paramètres de calibrage pour des fréquences de celles du signal radar (3) à partir du signal de test (5).

**2.** Radar météorologique selon la revendication 1, **caractérisé en ce que** le récepteur (2) présente un dispositif de division (8), par lequel le signal de test (5) et le signal radar (3) peuvent être séparés l'un de l'autre et peuvent être amenés parallèlement au dispositif d'évaluation (7).

**3.** Radar météorologique selon la revendication 1, **caractérisé en ce que** le récepteur présente un dispositif de commutation (9), avec lequel le signal amené au dispositif d'évaluation (7) peut être commuté entre le signal de test (5) et le signal radar (3).

**4.** Radar météorologique selon l'une quelconque des revendications 1 à 3, **caractérisé en ce que** les fréquences du signal de test (5) et du signal radar (3) présentent un décalage de fréquence ($\Delta f$), qui est sélectionnable en fonction de la largeur de bande du dispositif de traitement (6).

**5.** Radar météorologique selon l'une quelconque des revendications 1 à 4, **caractérisé en ce que** le dispositif de traitement (6) convertit les deux signaux (3, 5) à des fréquences intermédiaires.

**6.** Radar météorologique selon la revendication 5, **caractérisé en ce que** le décalage de fréquence ($\Delta f$) est inférieur à 10 %, en particulier inférieur à 5 %, de la fréquence intermédiaire du signal radar.

**7.** Radar météorologique selon l'une quelconque des revendications 1 à 6, **caractérisé en ce que** la dépendance de fréquence des paramètres de calibrage de l'au moins un chemin de signal (1) est modélisable comme constante dans la plage de fréquence entre les fréquences du signal radar (3) et du signal de test (5).

**8.** Radar météorologique selon l'une quelconque des revendications 1 à 6, **caractérisé en ce que** la dépendance de fréquence des paramètres de calibrage de l'au moins un chemin de signal (1) est modélisable comme indépendante d'influences extérieures, de sorte que des rapports formés à partir des paramètres de calibrage de l'au moins un chemin de signal (1) pour la fréquence du signal radar (3) et pour la fréquence du signal de test (5) soient modélisés constants dans le temps.

**9.** Radar météorologique selon l'une quelconque des revendications 1 à 6, **caractérisé en ce que** le signal de test (5) présente au moins deux fréquences, qui sont respectivement différentes de la fréquence du signal radar (3), et la dépendance de fréquence des paramètres de calibrage de l'au moins un chemin de signal (1) est modélisable par interpolation ou extrapolation des paramètres de calibrage contenus pour les fréquences de signal de test.

**10.** Radar météorologique selon l'une quelconque des revendications 1 à 9, **caractérisé en ce que** le coupleur (4) est réalisé en tant que diplexeur.

**11.** Radar météorologique selon l'une quelconque des revendications 1 à 10, **caractérisé en ce que** le récepteur (2) présente un chemin de signal (1) d'un canal TX Sample.

**12.** Radar météorologique selon la revendication 11, **caractérisé en ce qu'**un émetteur (10) est prévu pour une fréquence variable dans le temps du signal radar (3) et le traitement de signal peut être adapté à l'intérieur du dispositif de traitement (6) à la fréquence du signal radar (3) variable au fil du temps par le biais d'une ligne de réinjection (28).

**13.** Radar météorologique selon la revendication 12, **caractérisé en ce que** l'émetteur (10) est réalisé en tant qu'émetteur magnétron.

14. Radar météorologique selon la revendication 12 ou 13, **caractérisé en ce que** l'au moins une fréquence du signal de test (5) peut être ramenée à la fréquence du signal radar (3) par le biais d'une ligne de réinjection (28).

15. Radar météorologique selon l'une quelconque des revendications 1 à 14, **caractérisé en ce que** la forme du signal de test (5) peut être prédéfinie par un générateur de signal de test (26) pour la simulation de conditions météorologiques et pour le contrôle de la fonction conforme à l'affectation du radar météorologique.

Fig.1

Stand der Technik

EP 2 799 898 B1

Fig. 2

Fig. 3

Fig. 4

EP 2 799 898 B1

Fig. 5

EP 2 799 898 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011001206 A1
- DE 102011012843 A1
- US 7495599 B2
- US 8004458 B2
- WO 2012139029 A1